# EUROPÄISCHE PATENTSCHRIFT

(11) **EP 0 793 049 B1**
(45) Veröffentlichungstag und Bekanntmachung des Hinweises auf die Patenterteilung: **18.04.2001**
(21) Anmeldenummer: 97101746.2
(22) Anmeldetag: 05.02.1997
(51) Int. Cl.: F16L 47/00

(54) **Flanschverbindung für Rohrleitungen, Behälter, Apparate od. dgl. aus Kunststoff**
Flange coupling for pipes, vessels, devices and the like of plastic
Raccord à brides pour tuyaux, récipients, appareils et des choses semblables en matière plastique

(30) Priorität: 01.03.1996 DE 19607898
(43) Veröffentlichungstag der Anmeldung: 03.09.1997
(73) Patentinhaber: REINERT. RITZ GmbH, D-48531 Nordhorn (DE)
(72) Erfinder: Reinert, K. Albert, 48527 Nordhorn (DE)
(74) Vertreter: Patentanwälte Ostriga & Sonnet

(56) Entgegenhaltungen:
- DE-A- 2 900 773
- DE-U- 9 002 574

## Beschreibung

Die Erfindung bezieht sich auf eine Flanschverbindung nach dem Oberbegriff des Anspruchs 1.

Die Flanschverbindung ist die gebräuchlichste lösbare Verbindungsart für Rohrleitungen, Behälter und Apparate. Die Grundform der Flansche hat sich seit ihrer Einführung bis heute kaum verändert. Um an dieser Stelle nicht auf alle Flanscharten eingehen zu wollen, sei in folgenden der Los-Flansch mit Vorschweißbund betrachtet, der auch im Kunststoff-Rohrleitungs- und Apparatebau sehr häufig eingesetzt wird.

Eine Flanschverbindung setzt sich aus je zwei Vorschweißbunden und Flanschen sowie der Dichtung und den erforderlichen Schraubenbolzen der Flanschverschraubung zusammen. Die gesamte Axialkraft des angeschlossenen Rohrsystems und die sich aus dem im Rohrleitungssystem herrschenden Überdruck ergebenden Kräfte werden von den Schraubenbolzen aufgenommen. Diese übertragen die Kraft auf die Los-Flansche und diese wieder über den Bund auf die Dichtung. Bei insbesondere hohen Innendrücken kann sich der Dichtspalt zwischen den Bunden keilförmig aufweiten und die Dichtung zerstören, so daß auch schon vorgeschlagen wurde, teure Spezialdichtungen zu verwenden.

Die Schraubenbolzen werden im allgemeinen bei Stahlflanschverbindungen auf Vorspannung berechnet und sollen unter Betriebsdruck ein federelastisches Verhalten zeigen. Der Los-Flansch soll unter Belastung nur eine geringe elastische Verformung zeigen. Er soll die von den Schrauben aufgebrachten Kräfte gleichmäßig auf den Vorschweißbund übertragen.

Der Vorschweißbund ist immer aus dem gleichen Werkstoff wie das anzuschließende Rohr oder der Apparat. Er ist mit dem jeweiligen Anschlußstutzen verschweißt und überträgt die von den Flanschen aufgebrachte Kraft auf die Dichtung. Die Dichtung muß jeweils aus einem weicheren Werkstoff als der Vorschweißbund bestehen und soll möglichst ein elastisches Dichtverhalten zeigen.

Im Gegensatz zum Stahl-Vorschweißbund ist es beim thermoplastischen Kunststoff-Vorschweißbund, der unter Druck- und Zug-Spannungen ein Fließverhalten zeigt, schwieriger, die vom Flansch aufgebrachten Kräfte gleichförmig über die gesamte Dichtungsbreite auf die Dichtung zu übertragen. Diese Erkenntnis verlangt eine dem Kunststoff in besonderer Weise gerecht werdende Konstruktion.

Aus Gründen der Austauschbarkeit müssen die Hauptabmessungen, wie Außendurchmesser, Lochkreisdurchmesser und Anzahl der Schraubenbohrungen bei Stahl- u. Kunststoff-Flanschverbindungen aufeinander abgestimmt sein. Es wurden die Flansche nach DIN 2673 PN 10 auch für Kunststoff vorgesehen. Da die Maße für PE- und PP-Vorschweißbunde bestimmt werden durch den Außendurchmesser des Rohres, den Flanschansatzdurchmesser, den Außendurchmesser des Bundes und den Innendurchmesser des Rohres bzw. des mit Bund versehenen Rohrstücks, bleibt dem Konstrukteur letztlich nur die Baulänge des Rohrstücks als variable Größe für den konischen Übergang.

Der Vorschweißbund hat aufgrund dieser ungünstigen Geometrie vom Auflagepunkt des Flansches bis zur Dichtungsfläche ein Moment zu übertragen, das im kritischen Bereich zu ungenügender Flächenpressung führen kann. Das in der Leitung befindliche Medium kann zwischen Bund und Dichtung eindringen und wirkt als zusätzliche Kraft, die ein Biegemoment bewirkt, das am Übergang des konischen Teils zum Bund zur Spitzenspannung führt. Da die Spitzenspannung im Bereich des Bundes nicht erwünscht ist, wird es erforderlich, den Vorschweißbund zu verlängern oder den Innendurchmesser des Flansches zu verkleinern.

Die Möglichkeiten, daß sich Spannungsspitzen im Vorschweißbund in der vorbeschriebenen Weise aufbauen, kann auch durch einen zu stark angezogenen Flansch auftreten. Ist eine Flanschverbindung undicht, so neigt man dazu, die Vorspannung der Schrauben zu erhöhen. In den meisten Fällen ist aber schon durch eine zu hohe Vorspannung der Vorschweißbund vorgeschädigt, so daß durch ein weiteres Anziehen der Schrauben der Bund zerstört werden kann.

Aus Fig. 4 der DE 29 00 773 ist eine Rohrverbindung für zwei gleiche ringförmige Körper aus Kunststoff bekannt. Dabei sind Ringe aus Metall vorgesehen, die jeweils durch Eingießen fest an den Bunden der ringförmigen Körper angebracht sind. Jeder dieser Ringe weist eine Anzahl von über den Umfang verteilt angeordneten, in den Ring eingepressten Einbuchtungen auf. Diese Einbuchtungen dienen zum Eingriff hakenartiger Enden von Schraubklemmen, mit denen die Rohrverbindung zusammengehalten wird.

Im Unterschied zu dem oben geschilderten Stand der Technik, von dem die vorliegende Erfindung ausgeht, sind bei dieser Flanschverbindung weder ringförmige, umlaufende Flansche noch rings umlaufende Flächen an den Ringbunden der Kunststoffkörper vorgesehen, die zur Anlage von Gegenflächen von Ringflanschen bestimmt wären.

Die Metallringe haben hier lediglich die Funktion einer Bewehrung der aus Kunststoff bestehenden ringförmigen Körper im Bereich der Verbindung und den punktuellen, nicht umlaufenden Ansatzzonen der Spannelemente.

Der vorliegenden Erfindung liegt die Aufgabe zugrunde, eine Flanschverbindung entsprechend dem Oberbegriff des Anspruches 1 mit einfachen Mitteln so auszubilden, daß die Verbindung ohne Beeinträchtigung des Kunststoffmaterials der Rohrstücke (Vorschweißbunde) und der Dichtungsfähigkeit sowie ohne Verwendung von Spezialdichtungen sehr hohen Innendrücken zuverlässig standhalten kann.

Die Erfindung löst diese Aufgabe in erster Linie und im wesentlichen mit den Merkmalen des Anspruchs 1 und ist insbesondere dadurch gekennzeichnet, daß der Mantel des zylindrischen Rohrabschnitts über eine Kehlnut in die axialweisende Flansch-Anlagefläche übergeht, in welche die Kehlnut eingearbeitet ist, und daß der Flansch mit einer in die Kehlnut eingreifenden Ringwulst versehen ist.

Die Erfindung verzichtet auf den bislang üblichen konischen Übergangsabschnitt zwischen dem zylindrischen Rohrabschnitt und dem Ringbund, wodurch sich radial weiter innen liegende Kontaktflächen bzw. Kraftangriffspunkte zwischen Flansch und Ringbund ergeben. Hierdurch wird die Krafteinleitung in die Verbindung wesentlich verbessert. Die Flanschverbindung ist gegen ein keilförmiges Aufspreizen des Dichtspaltes unter Innendruck weitestgehend resistent und kann erheblich höhere Innendrücke aushalten wie auch Zugkräfte übertragen.

Die Kehlnut im Übergangsbereich zwischen dem zylindrischen Rohrabschnitt und dem Ringbund schafft in Verbindung mit dem Ringwulst des Flansches eine in gewisser Weise formschlüssige und sichere Zuordnung, und es werden aufgrund eines infolge der Kehlnut weichen Übergangs zwischen Rohrmantel und Bund Spannungsspitzen im Werkstoff des Rohrstücks bzw. Vorschweißbundes sicher vermieden.

Bevorzugt weist der Flansch außerdem an die Umfangsflächen des Ringbundes anlegbare Flächenabschnitte auf, die einer radialen Ausweitung bzw. Auswanderung des Ringbundes entgegenwirken und ein Fließen des Kunststoffmaterials verhindern.

Im übrigen versteht sich die Erfindung am besten anhand der nachfolgenden ausführlichen Beschreibung eines in den Zeichnungen dargestellten Ausführungsbeispiels. Darin zeigen:
- Fig. 1: einen Axialschnitt durch eine montierte Flanschverbindung,
- Fig. 2: eine Innenansicht eines Flanschrings und
- Fig. 3: einen Schnitt durch den Flanschring entsprechend der Schnittangabe III-III in Fig. 2.

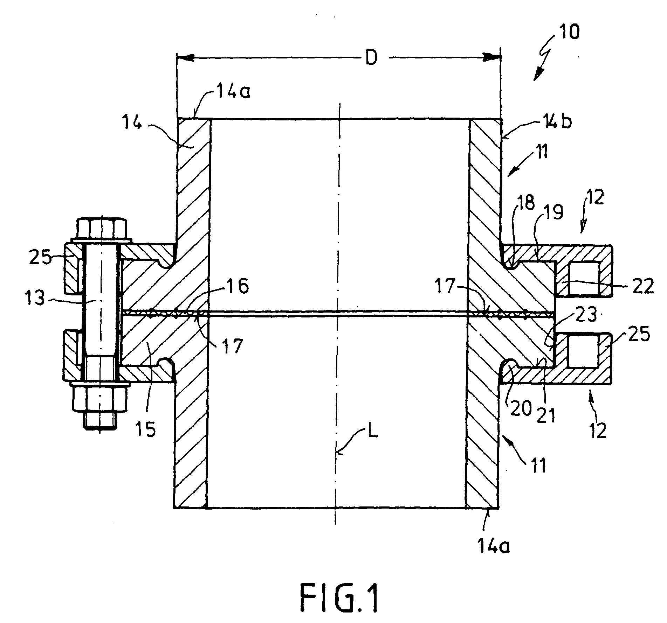

Die in Fig. 1 mit ihrer Gesamtheit mit 10 bezeichnete Flanschverbindung umfaßt zwei Rohrstücke 11 und zwei Flansche 12, hier sogenannte Losflansche, sowie eine Anzahl von Schraubenbolzen 13 für die feste Verspannung der beiden Flansche 12 gegeneinander.

Jedes Rohrstück 11 weist einen zylindrischen Rohrabschnitt 14 und an einem Ende einen damit in einstückig-stoffschlüssiger Verbindung stehenden Ringbund 15 auf. Beim dargestellten Ausführungsbeispiel handelt es sich bei den Rohrstücken um sogenannte Vorschweißbunde, die mit ihren freien Stirnenden 14a an das angrenzende Spitzende von Rohren gleicher Dimension angeschweißt werden.

Mit 16 ist ein Dichtring bezeichnet, der zwischen die in axialer Richtung und gegeneinander weisenden Ringstirnflächen 17 am bundseitigen Ende des Rohrstückes 11 eingelegt ist. Beim dargestellten Ausführungsbeispiel handelt es sich bei der Dichtung 16 um eine kreisringförmige Flachdichtung; es sind jedoch auch andere Dichtungen, so insbesondere O-Ringe, denkbar.

Eine wesentliche Besonderheit besteht in der äußeren Form der Rohrstücke 11 und ist darin zu sehen, daß der zylindrische Außenmantel 14b unter Verzicht auf einen sich zum Bund 15 hin im Durchmesser vergrößernden konischen Übergang im Anschluß an eine Kehlnut 18 in die zum Stirnende 14a hin weisende Bundfläche 19 übergeht. Dabei ist die Kehlnut 18 unmittelbar an die Außenmantelfläche 14b angrenzend in diese Bundfläche, die Flanschanlagefläche, 19 eingearbeitet.

Der Flansch 12 weist an seinem Innenumfang eine in die Kehlnut 18 - bei lockerer Zuordnung mit geringem Spiel - passende Ringwulst 20 auf und stützt sich mit einer axialweisenden Innen-Fläche 21 an der Bundfläche 19 als der Flanschanlagefläche möglichst satt ab. Dadurch können die Flansche 12 die Bunde 15 der Rohrkörper 11 auf der vollen radialen Erstreckung der umlaufenden Ringflächen 19 kontaktieren und über die Ringwulst 20 mit möglichst kurzem Abstand von der Längsmittelachse L, nämlich im Bereich des Außendurchmessers D des zylindrischen Abschnitts 14 des Rohrstücks 11, Kräfte übertragen. Hierdurch wird auf einfachste Weise sicher vermieden, daß auch bei hohen Innendrücken der Dichtspalt unzuträglich aufgeweitet und dadurch die Dichtung selbst in Mitleidenschaft gezogen wird.

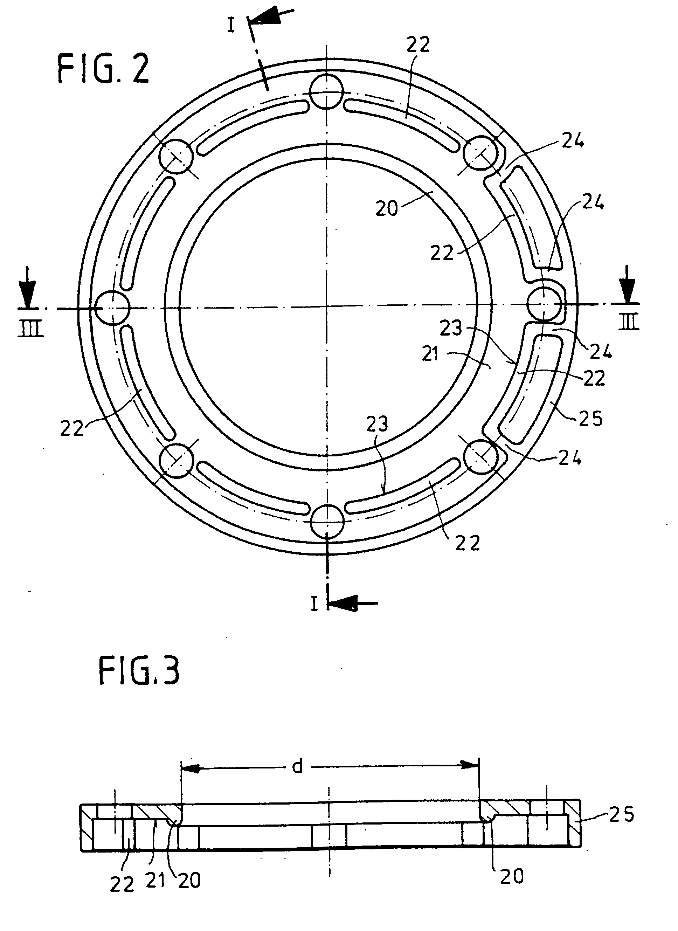

Ferner weist entsprechend Fig. 2 jeder Flansch 12 auf seiner Innenseite eine Anzahl von in Umfangsrichtung angeordneten Rippen 22 auf mit radial nach innen ausgerichteten Flächen 23, deren gemeinsamer Durchmesser auf den Außendurchmesser der Bunde 15 abgestimmt ist, so daß die Bunde 15 auch nach außen hin gegen Auswandern unter Last sowie aufgrund von Fließerscheinungen des Materials sicher festgehalten sind.

Die Rippen 22 können als lediglich in Umfangsrichtung umlaufende Stege ausgebildet sein, jedoch auch über geradlinig oder bogenförmig verlaufende Übergangsabschnitte 24 an einen außen umlaufenden Ringkragen 25 angebunden sein, wie dies beispielhaft im jeweils rechten Oktanten unterhalb und oberhalb der Quermittelachse in Fig. 2 schematisch dargestellt ist. Diese Ausgestaltungen schaffen einen insgesamt sehr eigenstabilen Flansch, der hohe Spannkräfte übertragen kann. Bevorzugt handelt es sich um einen Gußflansch aus GG oder GGG.

## Patentansprüche

1. Flanschverbindung (10) für Rohrleitungen, Behälter, Apparate od. dgl. aus Kunststoff, mit zwei Flanschen (12) und zwei mit ihnen zu verbindenden Rohrstücken (11; 14), insbesondere Losflanschverbindung mit Vorschweißbunden, wobei jedes Rohrstück (11; 14) einen Ringbund (15) mit zwei in entgegengesetzte Richtungen axialweisenden Flächen (17, 19), einer Dichtfläche (17) und einer Flansch-Anlagefläche(19), sowie einen zylindrischen Abschnitt (14) aufweist und wobei die Flansche (12) mittels Flanschverschraubungen (13) gegeneinander und von außen gegen die Flansch-Anlageflächen (19) der Ringbunde (15) verspannbar sind, dadurch gekennzeichnet, daß der Mantel (14b) des zylindrischen Rohrabschnitts (14) über eine Kehlnut (18) in die axialweisende Flansch-Anlagefläche (19) übergeht, in welche die Kehlnut (18) eingearbeitet ist, und daß der Flansch (12) mit einer in die Kehlnut (18) eingreifenden Ringwulst (20) versehen ist.

2. Flanschverbindung nach Anspruch 1, dadurch gekennzeichnet, daß der Innendurchmesser (d) des Flansches (12) im wesentlichen dem Außendurchmesser (D) des zylindrischen Rohrabschnitts (14) entspricht, und der Flansch (12) an seinem Innenrand die in die Kehlnut (18) eingreifende Ringwulst (20) aufweist.

3. Flanschverbindung nach Anspruch 1 oder 2, dadurch gekennzeichnet, daß der Flansch (12) an die Umfangsflächen des Ringbundes anlegbare Flächenabschnitte (23) aufweist.

## Claims

1. A flanged joint (10) for pipelines, containers, apparatus or the like of plastics material, having two flanges (12) and two pipe pieces (11; 14) to be joined thereto, in particular a loose flanged joint having welding necks, each pipe piece (11; 14) having an annular neck (15) which has two faces (17, 19) pointing axially in opposite directions, a sealing face (17) and a flange bearing face (19), as well as a cylindrical portion(14), and the flanges (12) being tensionable from the outside against the flange bearing faces (19) of the annular neck (15) by way of bolted flanged joints, characterised in that, by way of a groove (18), the curved surface (14b) of the cylindrical pipe portion (14) merges into the axially pointing flange bearing face (19) in which the groove (18) is incorporated, and in that the flange (12) is provided with an annular bead (20) engaging in the groove (18).

2. A flanged joint according to Claim 1, characterised in that the inside diameter (d) of the flange (12) corresponds substantially to the outside diameter (D) of the cylindrical pipe portion (14), and the flange (12) has on its inside edge the annular bead (20) engaging in the groove (18).

3. A flanged joint according to Claim 1 or 2, characterised in that the flange (12) has face portions (23) which may be placed against the peripheral faces of the annular neck.

## Revendications

1. Raccord à brides (10) pour tuyaux, récipients, appareils ou analogues, en matière synthétique, comportant deux brides (12) et deux éléments tubulaires (11 ; 14) à relier à celles-ci, en particulier des raccords à brides tournantes avec des collerettes à souder, chaque élément tubulaire (11 ; 14) présentant une collerette annulaire (15) ayant deux surfaces (17 ; 19) orientées axialement dans des directions opposées, une surface d'étanchéité (17) et une surface d'appui de bride (19), ainsi qu'un tronçon (14) cylindrique, et les brides (12) étant susceptibles d'être serrées, l'une contre l'autre et depuis l'extérieur, au moyen d'éléments de vissage de bride (13), contre les faces d'appui de bride (19) des collerettes annulaires (15), caractérisée par le fait que l'enveloppe (14b) du tronçon tubulaire cylindrique (14) se transforme, en passant par une gorge d'angle (18), en la face d'appui de bride (19) orientée axialement, dans laquelle la gorge d'angle (18) est usinée, et par le fait que la bride (12) est munie d'un bourrelet annulaire (20) s'engageant dans la gorge d'angle (18).

2. Raccord à bride selon la revendication 1, caractérisée par le fait que le diamètre intérieur (d) de la bride (12) correspond sensiblement au diamètre extérieur (D) du tronçon tubulaire (14) cylindrique et la bride (12) présente, sur son bord intérieur, le bourrelet annulaire (20) s'engageant dans la gorge d'angle (18).

3. Raccord à bride selon la revendication 1 ou 2, caractérisée par le fait que la bride (12) présente des tronçons de surface (23), susceptibles d'être appliqués sur les faces périphériques de la collerette annulaire.
